# EUROPEAN PATENT SPECIFICATION

(11) **EP 1 995 188 B1**
(45) Date of publication and mention of the grant of the patent: **31.08.2011**
(21) Application number: 08151602.3
(22) Date of filing: 19.02.2008
(51) Int. Cl.: B65G 1/137, G06Q 10/00, B66F 9/075

(54) **Control system for the management of pallets in warehouses**
Steuersystem zur Verwaltung von Paletten in Lagern
Système de contrôle pour la gestion de palettes dans des entrepôts

(30) Priority: 22.05.2007 SE 0701223
(43) Date of publication of application: 26.11.2008
(73) Proprietor: Strömberg Distribution AB, Stockholm (SE)
(72) Inventor: STRÖMBERG, Peter, 182 60, DJURSHOLM (SE)
(74) Representative: Örtenblad, Bertil Tore

(56) References cited:
- EP-A- 1 764 340
- DE-U1-202006 003 211
- JP-A- 3 003 803
- JP-A- 62 247 457
- US-A1- 2002 070 862
- US-A1- 2006 287 760
- US-A1- 2007 138 287

## Description

The present invention relates to a control system for the management of pallets in warehouses.

Warehouses in which goods of different types are loaded onto pallets may contain a very large number of pallet locations at which pallets with goods are stored. Such warehouses have pallet locations located above each other and beside each other.

When a pallet of goods is to be stored in the warehouse, information concerning the goods, the current customer, any other information, and the pallet location at which the pallet of goods is to be stored is fed into a central computer system. Thus, information about the pallet location at which the pallet with the requested goods is located is present in the computer system.

When certain goods are requested, in order for the goods to be, for example, transported to a customer, the relevant pallet location is requested from the central computer system. All pallet locations have a registration number. A truck is subsequently driven to the pallet location with the relevant pallet location number and the pallet is retrieved.

There is a problem involved here, given that the truck driver may drive to the wrong pallet location and thus retrieve the wrong pallet. A corresponding problem arises when a certain pallet is located at the wrong pallet location.

In JP 62247457 there is described a control system according to the preamble of claim 1, the system using bar codes attached to loads and shelves. The system described in JP 62247457 comprises to read said bar codes and to transmit the codes to a computer.

It would thus be desirable that an automatic check was carried out not only that the correct pallet is placed at a certain pallet location, but also that the correct pallet is retrieved from a certain pallet location. It would also be desirable that the central computer system contained information concerning whether a certain pallet has been stored at a pallet location or retrieved from a pallet location.

The control system of claim 1 satisfies these wishes.

The invention is described in more detail below, partially with reference to an embodiment of the invention shown in the attached drawings, where
- Figure 1 shows a warehouse with pallet locations,
- Figure 2 shows a part of the warehouse in Figure 1 at a larger scale, and
- Figure 3 shows a pallet location and a truck in order to illustrate the invention.

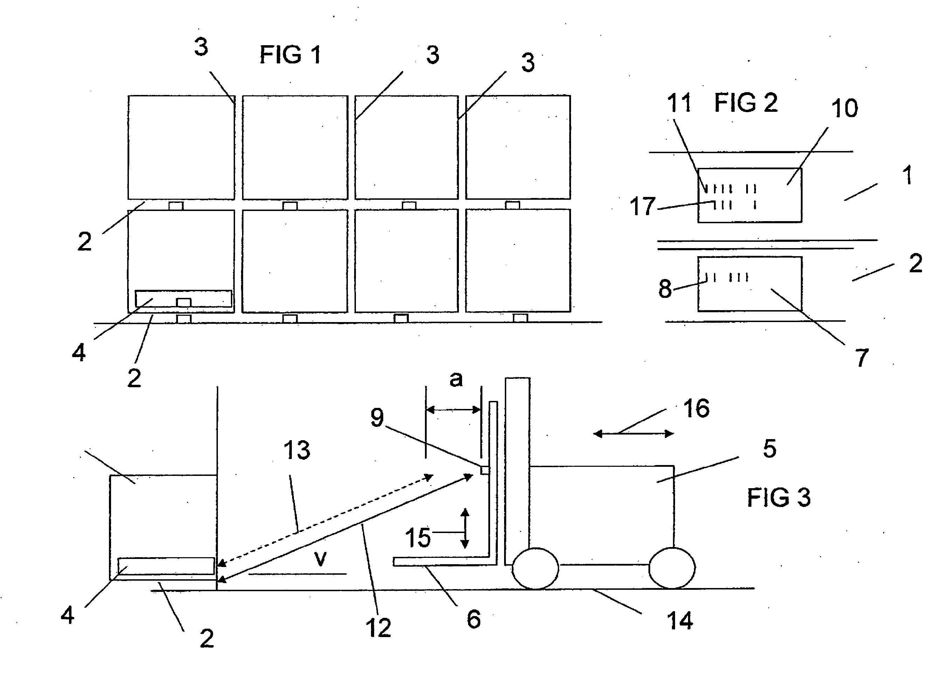

Figure 1 shows schematically a warehouse with pallet locations 1. The pallet locations are formed by horizontal beams 2 and vertical beams 3. The pallet locations are adapted for pallets 4 of the wooden type that has been established as a standard throughout Europe. Naturally, however, other types of pallets, such as specially designed pallets, can be used. In this case, of course, the pallet locations are designed to have dimensions that are adapted to such pallets.

Such pallets are loaded with a load, transported and stored in a warehouse of the type that is illustrated schematically in Figure 1. When a pallet is to be stored in a warehouse, the pallet is transported, by lorry for example, to a warehouse. A truck 5 lifts by means of its lifting fork 6 the pallet from the lorry and transports the pallet to a pallet location 1 in the warehouse, after which the truck places the pallet at the pallet location. When a pallet is to be retrieved from the warehouse, the truck 5 retrieves the pallet by means of its lifting forks and places the pallet at the desired location or on the desired vehicle.

The present invention relates to a control system for the management of pallets 4 in warehouses, where a number of pallet locations 1 are available in both the vertical direction and in the horizontal direction, where each pallet location has been visually labelled such that reading can take place, and where a truck 5 is available in order to load pallets 4 into and unload pallets 4 out from pallet locations 1.

According to the invention, each pallet location 1 is labelled with a code that can be read by machine. It is appropriate that the labelling is constituted by a sign 7 provided with a bar code 8. The bar code 8 is so located that it can be read by a reader 9 that is mounted on the said truck 5 when it is positioned in front of the relevant pallet location 1.

Furthermore, each pallet 4 is labelled with two bar codes 11, 17 located one above the other, that can be read by the said reader 9 when the pallet is located at a pallet location 1 in front of which the truck 5 is currently located. It is appropriate that the labelling of the pallet is constituted by a sign 10 of single-use type or multiple-use type, and that is provided with the bar codes. The sign may be of paper.

According to one preferred design, one 11 of the bar codes concerns the identity of the pallet. The second 17 code is a freely chosen bar code that differs from the bar codes of the pallet location and the identity of the pallet. The purpose of this design is that it will be possible to read the direction of the truck with the aid of the code of the pallet alone, independently of whether the pallet is located at a pallet location or not.

Furthermore, the said reader 9 is, according to the invention, arranged such that it reads forwards from the truck 5 and at an angle downwards relative to the horizontal plane.

According to one preferred embodiment, the said angle v forwards and downwards relative to the horizontal plane, at which the said reader is arranged to read, lies between 20 and 70 degrees.

The labelling of the pallet location and the labelling of the pallet comprise the said bar codes for identification of the pallet location and of the pallet.

It is appropriate that the bar code of the pallet is located approximately above the bar code of the pallet location.

According to one preferred embodiment, the said reader is a scanning laser of a suitable known type, which is arranged to scan in a plane that is perpendicular to the vertical plane. The scanner 9 is located on the truck such that the distance between the scanner and the lifting fork remains constant when the lifting fork moves in the vertical direction, as is illustrated by the arrow 15. The scanner, furthermore, is so arranged that it scans only one pallet location code or one pallet code at a time.

When a pallet is to be retrieved from the warehouse by means of the truck 5, the truck driver receives an instruction from the above-mentioned computer system concerning the pallet location from which a certain pallet is to be retrieved. The computer system contains information concerning the identity (ID) of the pallet and the identity (ID) of the pallet location. Each pallet in the warehouse is associated in the computer system with a certain pallet location.

The truck moves towards or away from the relevant pallet locations, as is shown by the arrow 16.

The truck driver drives to the pallet location as directed and inserts the lifting fork 6 under the pallet 4. As the truck is driven in towards the pallet location, the said reader will read first the code 8 of the pallet location, as is illustrated with the fully drawn line of sight 12 in Figure 3. When the truck has been moved a further distance forwards, a distance labelled "a", the reader will read the bar codes 11, 17 of the pallet, as is illustrated with the dashed line of sight 13 in Figure 3. This is a consequence of the fact that the codes are located at different heights above the floor 14, that the scanner is directed obliquely downwards, and that the truck moves forwards.

When the scanner has read the bar code of the pallet location and the bar codes of the pallet, these codes are sent in a wireless manner by means of a transmitter, not shown in the drawings, to a receiver, not shown in the drawings, connected to the said computer system. The computer system now checks that the pallet is the one that it was intended should be retrieved. In the case in which the computer system discovers that the pallet location code that has been read does not agree with the pallet code that has been read, the wireless system sends a signal to a receiver, not shown in the drawings, on the truck, which receiver is arranged to control an arrangement that will draw the attention of the truck driver to the situation, such as giving a voice message through loudspeakers, not shown in the drawings, in the truck or by controlling a display or a warning lamp. The procedure is in this way interrupted and it will be necessary to investigate where the intended pallet is located. This can be carried out manually, for example, by means of a portable scanner used to scan pallet codes.

Since the bar code of the pallet location is read first, and the bar codes of the pallet are read after this, it is established that the truck has retrieved a pallet. This information is transmitted to the computer system.

In the case in which the pallet location code and the pallet code agree, the truck removes the pallet from the pallet location and transports the pallet to its intended destination. When the truck moves backwards relative to the pallet in this case, the scanner will read the pallet codes but it will not read a pallet location code. This indicates that the pallet has been placed in another place than a pallet location. This information is transmitted to the computer system in the manner specified.

When the truck is to place a pallet at a given pallet location, the truck driver obtains information about the relevant pallet and fetches this pallet. The codes of the pallet are thus read, while no pallet location code is read. This indicates that the pallet has been retrieved from another place than a pallet location. This information is transmitted to the computer system. The truck driver obtains information about the pallet location that is intended, and drives the truck to this location, there delivering the pallet at the pallet location. The truck subsequently moves backwards from the pallet location, whereby, in a manner corresponding to that which has been described above, the scanner first reads the codes of the pallet and then reads the code of the pallet location.

Since the code of the pallet are read first, and the code of the pallet location is read after this, it is established that the truck has delivered a pallet.

At the same time, a check is made against the computer system, using the wireless transfer, that the pallet has been placed at the correct pallet location. In the case in which the pallet has been placed at the wrong pallet location, the computer system transmits a signal in the manner described above in order to control an arrangement that will draw the attention of the truck driver to the situation, such as giving a voice message or controlling a display or a warning lamp.

Figure 2 shows schematically the sign 7 for a pallet location code 8 and the sign 10 for the pallet codes 11, 17, such as they are located relative to each other for a pallet that is located in a pallet location.

It is obvious that the method described above solves the problems that were described in the introduction.

A number of embodiments have been described above. It is obvious that the scanner may be a scanner for visible light, that the signs may have other designs, etc.

Thus, the present invention is not to be regarded as limited to the embodiments specified above since it can be varied within the scope of the attached patent claims.

## Claims

1. A control system for the control of the management of pallets (4) in warehouses, comprising:
- a number of pallets (4) for supporting goods,
- a number of pallet locations (1) available in both the vertical direction and in the horizontal direction, wherein each pallet location (1) has been visually labelled such that reading can take place, and wherein each pallet location (1) has been labelled with a bar code (8) that can be read by machine,
- a truck (5) for loading the pallets (4) into and unloading pallets (4) out from pallet locations (1), and
- a reader (9) mounted on the truck (5), wherein the bar code (8) of each pallet location (1) is so located, that the reader (9) can read the bar code (8), when the truck (5) is positioned in front of the pallet location (1),
**characterised in that** each pallet (4) is labelled with two bar codes (11, 17) located one above the other, these two codes (11, 17) being readable by the said reader (9), and **in that** the said reader (9) is arranged such that it reads forwards from the truck (5) and at an angle (v) downwards relative to the horizontal plane.

2. A control system according to claim 1, **characterised in that** the said reader (9) is a scanning laser arranged to scan in a plane that is perpendicular to the vertical plane.

3. A control system according to claim 1 or 2, **characterised in that** the bar code (8) of the pallet location (1) relates to the identity of the pallet location (1) and one (11) of the two bar codes (11, 17) of the pallet (4) relates to the identity of the pallet (4).

4. A control system according to claim 2 or 3, **characterised in that** the two bar codes (11, 17) of the pallet (4) are located approximately above the bar code (8) of the pallet location (1), when the pallet (4) is located in a pallet location (1) in front of which the truck (5) is located, whereby the scanner (9) reads one bar code after the other when the truck (5) moves relative to the pallet location (1).

5. A control system according to claim 1, 2, 3 or 4, **characterised in that** one (11) of the two bar codes (11, 17) of the pallet (4) relates to the identity of the pallet (4) and the second (17) of the two bar codes (11, 17) of the pallet (4) is a freely chosen bar code that differs from the bar codes (8; 11) of the pallet location and of the identity of the pallet.

6. A control system according to claim 1, 2, 3, 4 or 5, **characterised in that** the said angle (v), forwards and downwards relative to the horizontal plane, at which the said reader (9) has been arranged to read, lies between 20 and 70 degrees.

## Patentansprüche

1. Steuersystem zur Steuerung der Verwaltung von Paletten (4) in Lagern, mit:
- einer Anzahl von Paletten (4) zum Tragen von Gütern,
- einer Anzahl von Palettenplätzen (1), die sowohl in vertikaler Richtung als auch in horizontaler Richtung verfügbar sind, wobei jeder Palettenplatz (1) visuell derart markiert ist, dass ein Ablesen stattfinden kann, und wobei jeder Palettenplatz (1) mit einem Strichcode (8) markiert ist, der maschinell abgelesen werden kann,
- einem Gabelstapler (5) zum Einladen der Paletten (4) in die Palettenplätze (1) und zum Ausladen der Paletten (4) aus den Palettenplätzen (1), und
- einer an dem Gabelstapler (5) angebrachten Lesevorrichtung (9), wobei der Strichcode (8) jedes Palettenplatzes (1) derart angeordnet ist, dass die Lesevorrichtung (9) den Strichcode (8) ablesen kann, wenn der Gabelstapler (5) vor dem Palettenplatz (1) angeordnet ist,
**dadurch gekennzeichnet, dass** jede Palette (4) mit zwei übereinander angeordneten Strichcodes (11, 17) markiert ist, wobei diese beiden Codes (11, 17) von der Lesevorrichtung (9) abgelesen werden können, und dass die Lesevorrichtung (9) derart angeordnet ist, dass sie von dem Gabelstapler (5) aus nach vorwärts gerichtet und in einem Winkel (v) nach unten bezüglich der horizontalen Ebene abliest.

2. Steuersystem gemäß Anspruch 1, **dadurch gekennzeichnet, dass** die Lesevorrichtung (9) ein Abtastlaser ist, der so angeordnet ist, dass er in einer zu der vertikalen Ebene senkrecht liegenden Ebene abtastet.

3. Steuersystem gemäß Anspruch 1 oder 2, **dadurch gekennzeichnet, dass** sich der Strichcode (8) des Palettenplatzes (1) auf die Identität des Palettenplatzes (1) und einer (11) der beiden Strichcodes (11, 17) der Palette (4) auf die Identität der Palette (4) bezieht.

4. Steuersystem gemäß Anspruch 2 oder 3, **dadurch gekennzeichnet, dass** die beiden Strichcodes (11, 17) der Palette (4) ungefähr über dem Strichcode (8) des Palettenplatzes (1) angeordnet sind, wenn die Palette (4) in einem Palettenplatz (1) angeordnet ist, vor welchem der Gabelstapler (5) angeordnet ist, wodurch der Scanner (9) einen Strichcode nach dem anderen abliest, wenn sich der Gabelstapler (5) bezüglich des Palettenplatzes (1) bewegt.

5. Steuersystem gemäß Anspruch 1, 2, 3 oder 4, **dadurch gekennzeichnet, dass** sich einer (11) der beiden Strichcodes (11, 17) der Palette auf die Identität der Palette (4) bezieht und der zweite (17) der beiden Strichcodes (11, 17) der Palette (4) ein frei gewählter Strichcode ist, der sich von den Strichcodes (8; 11) des Palettenplatzes und der Identität der Palette unterscheidet.

6. Steuersystem gemäß Anspruch 1, 2, 3, 4 oder 5, **dadurch gekennzeichnet, dass** der Winkel (v) nach vorwärts und nach unten bezüglich der horizontalen Ebene, in welchem die Lesevorrichtung (9) zum Lesen angeordnet ist, zwischen 20 und 70 Grad beträgt.

## Revendications

1. Système de commande de la gestion de palettes (4) dans des entrepôts comprenant :
- un ensemble de palettes (4) pour recevoir des marchandises,
- un ensemble d'emplacements de palette (1) disponibles à la fois dans la direction verticale et dans la direction horizontale,
* chaque emplacement de palette (1) étant étiqueté optiquement de façon à pouvoir être lu, et
* chaque emplacement de palette (1) est étiqueté avec un code-barres (8) lisible par une machine,
- un chariot (5) pour charger et décharger les palettes (4) des emplacements de palette (1), et
- un lecteur (9) installé sur le chariot (5), le code-barres (8) de chaque emplacement de palette (1) étant positionné de façon que le lecteur (9) puisse lire le code-barres (8) lorsque le chariot (5) est situé devant l'emplacement de palette (1),
système **caractérisé en ce que**
- chaque palette (4) est étiquetées avec deux codes-barres (11, 17) l'un au-dessus de l'autre,
- les deux codes-barres (11, 17) étant lisibles par le lecteur (9), et
- le lecteur (9) est conçu pour lire vers l'avant à partir du chariot (5) et suivant un angle (v) descendant par rapport au plan horizontal.

2. Système de commande selon la revendication 1,
**caractérisé en ce que**
le lecteur (9) est un laser de balayage destiné à balayer dans un plan perpendiculaire au plan vertical.

3. Système de commande selon la revendication 1 ou 2,
**caractérisé en ce que**
le code-barres (8) de l'emplacement de palette (1) identifie l'emplacement de palette (1) et l'un (11) des deux codes-barres (11, 17) de la palette (4) identifie la palette (4).

4. Système de commande selon la revendication 2 ou 3,
**caractérisé en ce que**
les deux codes-barres (11, 17) de la palette (4) sont situés approximativement au-dessus du code-barres (8) de l'emplacement de palette (1) lorsque la palette (4) est dans un emplacement de palette (1) à l'avant de la position du chariot (5),
le dispositif de balayage (9) lisant un code-barres après l'autre lorsque le chariot (5) se déplace par rapport à l'emplacement de palette (1).

5. Système de commande selon les revendications 1, 2, 3 ou 4,
**caractérisé en ce que**
l'un (11) des deux codes-barres (11, 17) de la palette (4) concerne l'identité de la palette (4) et le second code (17) parmi les deux codes-barres (11, 17) de la palette (4) est un code-barres choisi librement qui diffère des codes-barres (8, 11) de l'emplacement de palette et de l'identité de la palette.

6. Système de commande selon les revendications 1, 2, 3, 4 ou 5,
**caractérisé en ce que**
l'angle (v) dirigé vers l'avant et vers le bas par rapport au plan horizontal suivant lequel le lecteur (9) est installé pour lire, est compris entre 20° et 70°.
